# EUROPÄISCHE PATENTSCHRIFT

(11) **EP 1 438 997 B1**
(45) Veröffentlichungstag und Bekanntmachung des Hinweises auf die Patenterteilung: **21.02.2007**
(21) Anmeldenummer: 03104549.5
(22) Anmeldetag: 04.12.2003
(51) Int. Cl.: B01D 27/08

(54) **Kraftstoffilter**
Fuel filter
Filtre à carburant

(30) Priorität: 27.12.2002 DE 10261314
(43) Veröffentlichungstag der Anmeldung: 21.07.2004
(73) Patentinhaber: MANN+HUMMEL GmbH, 71638 Ludwigsburg (DE)
(72) Erfinder: Amesöder, Dieter, 71732, Tamm (DE); Schreckenberger, Dieter, 71672, Marbach (DE)

(56) Entgegenhaltungen:
- DE-A- 3 923 476
- US-A1- 2002 040 569

## Beschreibung

Die Erfindung betrifft einen Kraftstoffilter der im Oberbegriff des Anspruchs 1 angegebenen Gattung.

Aus der DE 199 55 206 A1 ist ein Kraftstoffilter bekannt, bei dem ein Filterelement in einem Gehäuse angeordnet ist. Das Gehäuse ist durch einen Filterkopf verschlossen, in dem die Anschlüsse für Einlaß und Auslaß ausgebildet sind.

Aus der DE 39 23 476 A1 ist ein Filter für eine Treibstoff- oder Schmierflüssigkeit eines Motors zu entnehmen. Der Filter umfasst einen Korpus in Topfform, dieser ist aus Kunststoffmaterial gefertigt. In den Korpus ist eine Filterpatrone eingefügt, sowie ein Verschlussdeckel, der diesen Korpus umfasst. Der Verschlussdeckel ist ebenfalls aus Kunststoffmaterial gefertigt. Die in dem Korpus befindliche Filterpatrone ist mit Endscheiben versehen, die sich an den Stirnseiten befinden. Diese Filterpatrone, mit ihren Endscheiben, wird über ein Stützrohr geschoben, wobei das Stützrohr selbst nicht Filterfest sondern Gehäusefest angeordnet ist. Das Mittelrohr ist ein, von dem Filterelement getrenntes Bauteil. Dieses System erfordert einen hohen Montageaufwand und hinsichtlich der Einzelkomponenten eine hohe Passgenauigkeit.

Der Erfindung liegt die Aufgabe zugrunde, einen Kraftstoffilter der gattungsgemäßen Art zu schaffen, der einen einfachen Aufbau besitzt.

Diese Aufgabe wird durch einen Kraftstoffilter mit den Merkmalen des Anspruchs 1 gelöst.

Die einstückige Ausbildung des Deckels mit dem Mittelrohr vermindert die Anzahl der benötigten Bauteile. Dabei ist das Filterelement zweckmäßig direkt mit dem Deckel verbunden. Hierdurch besitzt der Kraftstoffilter einen einfachen Aufbau und eine kompakte Bauweise. Das am Deckel angeformte Mittelrohr gewährleistet gleichzeitig eine ausreichende Stabilität des Filterelements.

Insbesondere ist vorgesehen, daß der Deckel und das Mittelrohr aus Kunststoff bestehen. Deckel und Mittelrohr können so in einem gemeinsamen Arbeitsgang einfach z.B. durch Spritzen hergestellt werden. Zur Verbindung des Kraftstoffilters mit Anschlüssen ist vorgesehen, daß der Deckel eine mittige Öffnung aufweist, die in das Mittelrohr mündet und in der ein Gewindeeinsatz angeordnet ist. Der Gewindeeinsatz erlaubt das Aufschrauben des Kraftstoffilters an einen Flansch, in dem die Anschlüsse für Einlaß und Auslaß ausgebildet sind. Der Kraftstoffilter kann auf diese Weise einfach ausgetauscht werden. Vorteilhaft ist der Gewindeeinsatz in den Deckel integriert. Eine gute Verbindung des Gewindeeinsatzes mit dem Deckel ergibt sich, wenn der Deckel mit dem Mittelrohr auf dem Gewindeeinsatz aufgespritzt ist. Hierdurch wird gleichzeitig die Herstellung des Kraftstoffilters vereinfacht, da zur Fixierung des Gewindeeinsatzes im Deckel kein zusätzlicher Arbeitsgang notwendig ist. Es kann jedoch auch zweckmäßig sein, daß der Gewindeeinsatz mit Ultraschall in den Deckel eingeschallt ist.

Vorteilhaft ist der Deckel scheibenförmig ausgebildet. Hierdurch ergibt sich eine kompakte Bauform. Der Einlaß ist zweckmäßig durch im Deckel angeordnete Öffnungen gebildet, die in einen zwischen dem Filterelement und dem Gehäuse gebildeten Ringraum münden. Die Ausbildung der Anschlüsse als durch den Deckel ragende Öffnungen vereinfacht den Aufbau des Filters. Ein Filterkopf mit aufwendiger Kanalführung, wie er aus dem Stand der Technik bekannt ist, wird nicht benötigt.

Es ist vorgesehen, daß an der dem Deckel gegenüberliegenden Seite des Filterelementes eine Bodenplatte mit dem Filterelement verbunden ist. Die Bodenplatte trennt Rohseite und Reinseite. Zweckmäßig ist das Filterelement mit dem Deckel und/oder der Bodenplatte verschweißt, insbesondere durch Spiegelschweißen oder durch Heizelementschweißen. Der Schweißprozeß führt zu einer festen, dichten Verbindung des Filterelements mit dem Deckel und der Bodenplatte. Zusätzliche Dichtungen werden nicht benötigt. Durch das Verschweißen ergibt sich ein kompakte Bauform. Gleichzeitig werden wenig Einzelteile für den Kraftstoffilter benötigt.

Zur Abdichtung des Einlasses in den Kraftstoffilter gegenüber der Umgebung ist vorgesehen, daß der Deckel eine Nut aufweist, in der eine Dichtung geführt ist, die über die Außenseite des Deckels ragt. Beim Anschrauben des Kraftstoffilters an einen Flansch kommt die Dichtung zur Anlage an den Flansch und dichtet den scheibenförmigen Raum zwischen der Dichtung und dem Gewindeeinsatz gegenüber der Umgebung ab. Die Rohseite ist an dieser Stelle von der Reinseite über die Verbindung des Gewindeeinsatzes zu dem Flansch abgedichtet. Vorteilhaft sind das Gehäuse und die Bodenplatte aus Kunststoff. Das Gehäuse ist insbesondere aus PA oder aus POM. Durch die Ausbildung aus Kunststoff können alle benötigten Bauteile in einem Spritzgießprozeß hergestellt und durch Verschweißen oder durch Kleben miteinander verbunden werden. Der Kraftstoffilter kann aus wenigen Einzelteilen hergestellt werden, wodurch sich ein einfacher, kompakter Aufbau ergibt.

Ein Ausführungsbeispiel der Erfindung wird im folgenden anhand der Zeichnung erläutert. Es zeigen:
- Fig. 1: eine perspektivische Ansicht eines teilweise geschnitten dargestellten Kraftstoffilters,
- Fig. 2: eine vergrößerte Darstellung eines Ausschnitts aus Fig. 1,
- Fig. 3: eine Explosionsdarstellung des Kraftstoffilters 1 mit geschnitten dargestelltem Filterelement.

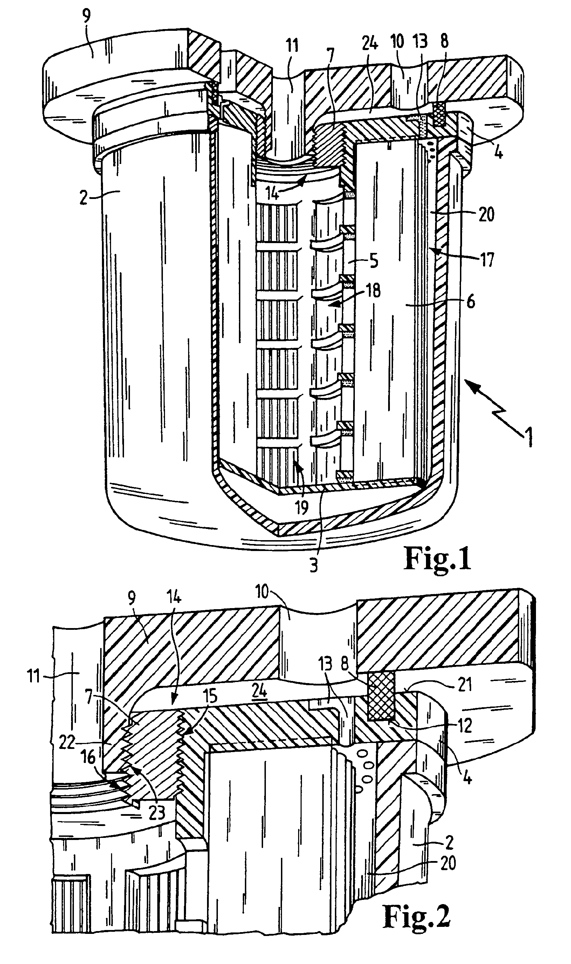

Der in den Fig. 1 bis 3 dargestellte Kraftstoffilter 1 besitzt ein becherförmiges Gehäuse 2, das aus einem Kunststoff, insbesondere aus PA (Polyamid) oder POM (Polyoxymethylen) besteht. Das Gehäuse 2 ist durch einen Deckel 4 verschlossen, der scheibenförmig ausgebildet ist und der stirnseitig mit dem Gehäuse 2 verbunden ist. Deckel 4 und Gehäuse 2 können beispielsweise durch ein Schweißverfahren oder ein Klebeverfahren miteinander verbunden sein. In dem Gehäuse 2 ist ein Filterelement 6 angeordnet, das zylindrisch ausgebildet ist und beispielsweise ein Lamellenfilter sein kann. Es kann jedoch auch zweckmäßig sein, daß das Filterelement eine andere geometrische Form aufweist, beispielsweise oval ist. Das Filterelement 6 besitzt einen Zentralkanal 19, in dem ein Mittelrohr 5 angeordnet ist. Das Mittelrohr 5 weist eine gitterförmige Struktur auf und ist einteilig mit dem Deckel 4 ausgebildet. An der dem Deckel 4 gegenüberliegenden Seite des Filterelementes 6 ist eine Bodenplatte 3 mit dem Filterelement 6 verbunden. Das Filterelement 6 ist mit dem Deckel 4 und der Bodenplatte 3 zweckmäßig durch ein Schweißverfahren, insbesondere durch Spiegelschweißen oder durch Heizelementschweißen verbunden. Dabei wird der Kunststoff so erwärmt, daß das Filterelement in den Kunststoff gedrückt werden kann und so dichtend mit diesem verbunden ist. Auch die Bodenplatte 3 besteht zweckmäßig aus Kunststoff. Es kann auch ein Klebeverfahren zur Verbindung des Filterelements 6 mit Deckel 4 und/oder Bodenplatte 3 vorteilhaft sein.

Der Deckel 4 weist eine mittige Öffnung 14 auf, die in den Zentralkanal 19 mündet. In der Öffnung 14 ist ein metallischer Gewindeeinsatz 7 angeordnet. Der Gewindeeinsatz 7 besitzt ein Außengewinde 15. Durch die rillenförmige Struktur ist eine feste, dichtende Verbindung zwischen dem Gewindeeinsatz 7 und dem Deckel 4 gewährleistet. Es kann auch eine andere Oberflächenstrukturierung des Gewindeeinsatzes 7 zweckmäßig sein. Der Gewindeeinsatz 7 ist von dem Deckel 4 und dem im Bereich der Öffnung 14 an den Deckel 4 anschließenden Mittelrohr 5 umspritzt. Hierdurch können Mittelrohr und Deckel in einem Arbeitsgang hergestellt und gleichzeitig mit dem Gewindeeinsatz fest verbunden werden. Es kann jedoch auch vorteilhaft sein, daß der Gewindeeinsatz 7 in die Öffnung 14 eingeschraubt oder auf sonstige Weise, insbesondere durch Einschallen mit Ultraschall, mit dieser verbunden ist. Der Gewindeeinsatz 7 ist zweckmäßig etwa bündig mit der Außenseite 21 des Deckels 4 im Deckel 4 angeordnet.

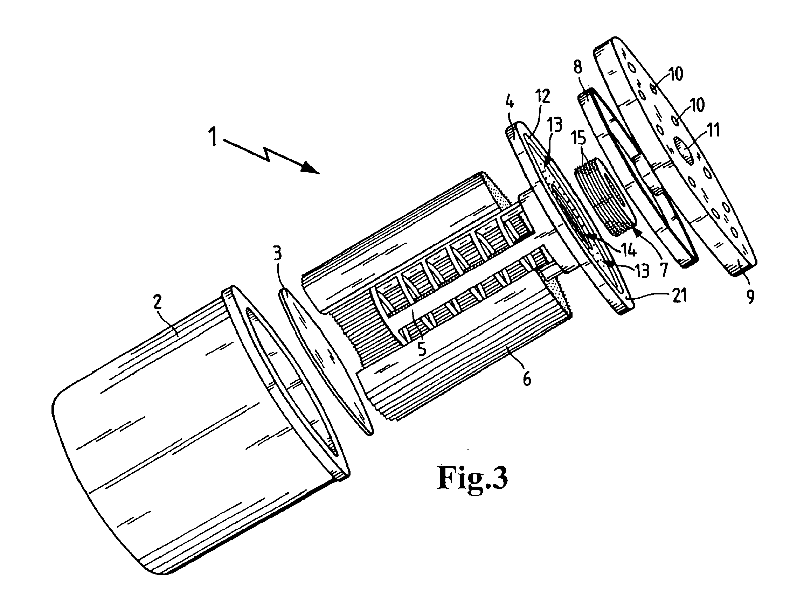

Der Gewindeeinsatz 7 besitzt ein Innengewinde 16, mit dem der Kraftstoffilter 1 an einem Flansch 9 befestigt werden kann. Hierzu weist der Flansch 9 einen Anschluß 22 auf, der mit einem Außengewinde 23 versehen ist. Im Bereich des Anschlusses 22 ist eine zentrale Öffnung 11 im Flansch 9 angeordnet, die durch Aufschrauben des Kraftstoffilters 1 auf den Anschluß 22 fluidisch mit dem Zentralkanal 19 verbunden ist. Der Zentralkanal 19 umfaßt die Reinseite 18 des Kraftstoffilters 1. Die zentrale Öffnung 11 im Flansch 9 ist somit mit dem im Gewindeeinsatz 7 ausgebildeten Auslaß aus dem Kraftstoffilter 1 verbunden. Die Rohseite 17 des Kraftstoffilters 1 umfaßt den zwischen dem Filterelement 6 und dem Gehäuse 2 gebildeten Raum. Der Einlaß in den Kraftstoffilter 1 ist durch im Deckel 4 ausgebildete Öffnungen 13 gebildet. Wie insbesondere in Fig. 2 dargestellt verjüngen sich die Öffnungen 13 von der dem Flansch 9 zugewandten Außenseite 21 des Deckels in den Kraftstoffilter 1. Die Öffnungen 13 münden in dem zwischen dem Filterelement 6 und dem Gehäuse 2 gebildeten Ringraum 20. Die Außenseite 21 des Deckels 4 weist radial außerhalb der Öffnungen 13 eine Nut 12 auf. In der Nut 12 ist eine Dichtung 8 angeordnet, die über die Außenseite 21 des Deckels 4 ragt und die an dem Flansch 9, an dem der Kraftstoffilter 1 festgeschraubt ist, anliegt. Die Öffnungen 13 bilden den Einlaß in den Kraftstoffilter 1. Zur Zufuhr von Kraftstoff sind am Flansch 9 Öffnungen 10 angeordnet, die, wie in Fig. 3 dargestellt, symmetrisch um die Zentralöffnung 11 angeordnet sind. Die Öffnungen 10 besitzen zur zentralen Öffnung 11 zweckmäßig einen Abstand, der etwa dem Abstand der Öffnungen 13 zur zentralen Öffnung 11 entspricht. Die Öffnungen 10 münden an einem Raum 24, der zwischen dem Flansch 9 und dem Deckel 4 gebildet ist und der über die Dichtung 8 zur Außenseite des Kraftstoffilters 1 und über den Gewindeeinsatz 7 und den Anschluß 22 gegenüber der Reinseite 18 des Kraftstoffilters 1 abgedichtet ist.

Der Kraftstoffilter 1 besitzt nur wenig Einzelteile und kann - bis auf den Gewindeeinsatz 7 - vollständig aus Kunststoff bestehen. Es kann auch zweckmäßig sein, daß der Gewindeeinsatz 7 aus Kunststoff besteht. Die Dichtung 8 kann einen rechteckigen Querschnitt aufweisen, es kann jedoch auch zweckmäßig sein, als Dichtung 8 einen O-Ring vorzusehen. Es kann auch zweckmäßig sein, daß die Öffnung 14 im Deckel 4 ein Gewinde aufweist, mit dem der Kraftstoffilter 1 auf einem Anschluß 22 festgeschraubt werden kann. In diesem Fall ist kein Gewindeeinsatz 7 vorgesehen.

## Patentansprüche

1. Kraftstofffilter mit einem becherförmigen Gehäuse (2), in dem ein Filterelement (6) angeordnet ist, das eine Rohseite (17) von einer Reinseite (18) trennt, wobei die Rohseite (17) mit einem Einlass und die Reinseite (18) mit eine Auslass verbunden ist, und wobei das Filterelement (6) einen Zentralkanal (19) aufweist, wobei in dem Zentralkanal (19) ein Mittelrohr (5) angeordnet ist, wobei das Gehäuse (2) mit einem Deckel (4) verschlossen ist, der mit dem Mittelrohr (5) einstückig ausgebildet ist, wobei der Deckel (4) und das Mittelrohr (5) aus Kunststoff bestehen, **dadurch gekennzeichnet, dass** das Filterelement (6) mit dem Deckel (4) und einer aus Kunststoff bestehenden, an der dem Deckel (4) gegenüberliegenden Seite des Filterelements angeordneten Bodenplatte (3) durch ein Schweißverfahren, insbesondere durch Spiegelschweißen oder Heizelementschweißen verbunden ist.

2. Kraftstoffilter nach Anspruch 1,
**dadurch gekennzeichnet, daß** der Deckel (4) eine mittige Öffnung (14) aufweist, die in das Mittelrohr (5) mündet und in der ein Gewindeeinsatz (7) angeordnet ist.

3. Kraftstoffilter nach Anspruch 2,
**dadurch gekennzeichnet, daß** der Gewindeeinsatz (7) in den Deckel (4) integriert ist.

4. Kraftstoffilter nach Anspruch 3,
**dadurch gekennzeichnet, daß** der Deckel (4) mit dem Mittelrohr (5) auf dem Gewindeeinsatz (7) aufgespritzt ist.

5. Kraftstoffilter nach Anspruch 3,
**dadurch gekennzeichnet, daß** der Gewindeeinsatz (7) mit Ultraschall in den Deckel (4) eingeschallt ist.

6. Kraftstoffilter nach einem der Ansprüche 2 bis 5,
**dadurch gekennzeichnet, daß** der Gewindeeinsatz (7) aus Metall ist.

7. Kraftstoffilter nach einem der Ansprüche 1 bis 6,
**dadurch gekennzeichnet, daß** der Deckel (4) scheibenförmig ausgebildet ist.

8. Kraftstoffilter nach einem der Ansprüche 1 bis 7,
**dadurch gekennzeichnet, daß** der Einlaß durch im Deckel (4) angeordnete Öffnungen (13) gebildet ist, die in einem zwischen dem Filterelement (6) und dem Gehäuse (2) gebildeten Ringraum (20) münden.

9. Kraftstoffilter nach einem der Ansprüche 1 bis 8,
**dadurch gekennzeichnet, daß** an der dem Deckel (4) gegenüberliegenden Seite des Filterelements (6) eine Bodenplatte (3) mit dem Filterelement (6) verbunden ist.

10. Kraftstoffilter nach einem der Ansprüche 1 bis 9,
**dadurch gekennzeichnet, daß** der Deckel (4) eine Nut (12) aufweist, in der eine Dichtung (8) geführt ist, die über die Außenseite (21) des Deckels (4) ragt.

11. Kraftstoffilter nach einem der Ansprüche 9 bis 10,
**dadurch gekennzeichnet, daß** das Gehäuse (2)aus Kunststoff ist.

12. Kraftstoffilter nach einem der Ansprüche 1 bis 12,
**dadurch gekennzeichnet, daß** das Gehäuse (2) aus PA oder POM ist.

## Claims

1. Fuel filter having a cup-shaped housing (2), in which a filter element (6) is disposed, the said filter element separating an unfiltered side (17) from a filtered side (18), wherein the unfiltered side (17) is connected to an inlet and the filtered side (18) is connected to an outlet, and wherein the filter element (6) includes a central duct (19), wherein a central tube (5) is disposed in the central duct (19), wherein the housing (2) is closed by means of a cover (4) that is integrally formed with the central tube (5), wherein the cover (4) and the central tube (5) are produced from plastics material, **characterised in that** the filter element (6) is connected to the cover (4) and to a base plate (3), which is disposed on the side of the filter element situated opposite the cover (4) and is produced from plastics material, by means of a welding method, more especially by means of butt-welding or heat element welding.

2. Fuel filter according to claim 1, **characterised in that** the cover (4) include a central opening (14), which opens outs into the central tube (5) and in which a threaded insert (7) is disposed.

3. Fuel filter according to claim 2, **characterised in that** the threaded insert (7) is incorporated into the cover (4).

4. Fuel filter according to claim 3, **characterised in that** the cover (4) with the central tube (5) is sprayed on the threaded insert (7).

5. Fuel filter according to claim 3, **characterised in that** the threaded insert (7) is acoustically irradiated into the cover (4) with ultrasound.

6. Fuel filter according to one of claims 2 to 5, **characterised in that** the threaded insert (7) is made of metal.

7. Fuel filter according to one of claims 1 to 6, **characterised in that** the cover (4) is disc-shaped.

8. Fuel filter according to one of claims 1 to 7, **characterised in that** the inlet is formed by openings (3), which are disposed in the cover (4) and which open out in an annular space (20) that is formed between the filter element (6) and the housing (2).

9. Fuel filter according to one of claims 1 to 8, **characterised in that** a base plate (3) is connected to the filter element (6) on the side of the filter element (6) situated opposite the cover (4).

10. Fuel filter according to one of claims 1 to 9, **characterised in that** the cover (4) includes a groove (12), in which a seal (8) is guided, which projects beyond the outside (21) of the cover (4).

11. Fuel filter according to one of claims 9 to 10, **characterised in that** the housing (2) is produced from plastics material.

12. Fuel filter according to one of claims 1 to 12, **characterised in that** the housing (2) is produced from polyamide (PA) or polyoxymethylene (POM).

## Revendications

1. Filtre à carburant avec un boîtier (2) en forme de pot, logeant un élément de filtre (6) qui sépare un côté brut (17) d'un côté propre (18), le côté brut (17) étant raccordé à une entrée et le côté propre (18) à une sortie, et dont l'élément de filtre (6) présente un canal central (19) logeant un tube central (5) et dont le boîtier (2) est fermé par un couvercle (4) formé d'une seule pièce avec le tube central (5), le couvercle (4) et le tube central (5) étant en matière plastique,
**caractérisé en ce que**
l'élément de filtre (6) est assemblé au couvercle (4) et à une plaque de fond (3) en matière plastique disposée sur le côté de l'élément de filtre (6) opposé au couvercle (4) par un procédé de soudage, en particulier un procédé de soudage en bout par réflecteurs, ou par éléments chauffants.

2. Filtre à carburant selon la revendication 1,
**caractérisé en ce que**
le couvercle (4) présente une ouverture centrale (14) débouchant dans le tube central (5) et logeant un insert fileté (7).

3. Filtre à carburant selon la revendication 2,
**caractérisé en ce que**
l'insert fileté (7) est intégré dans le couvercle (4).

4. Filtre à carburant selon la revendication 3,
**caractérisé en ce que**
le couvercle (4) avec le tube central (5) est moulé par injection sur l'insert fileté (7).

5. Filtre à carburant selon la revendication 3,
**caractérisé en ce que**
l'insert fileté (7) est soudé par ultrasons dans le couvercle (4).

6. Filtre à carburant selon l'une quelconque des revendications 2 à 5,
**caractérisé en ce que**
l'insert fileté (7) est en métal.

7. Filtre à carburant selon l'une quelconque des revendications 1 à 6,
**caractérisé en ce que**
le couvercle (4) est en forme de disque.

8. Filtre à carburant selon l'une quelconque des revendications 1 à 7,
**caractérisé en ce que**
l'entrée est formée par des ouvertures (13) pratiquées dans le couvercle (4), et qui débouchent dans un espace annulaire (20) formé entre l'élément de filtre (6) et le boîtier (2).

9. Filtre à carburant selon l'une quelconque des revendications 1 à 8,
**caractérisé en ce qu'**
une plaque de fond (3) est assemblée à l'élément de filtre (6) sur le côté de l'élément de filtre (6) opposé au couvercle (4).

10. Filtre à carburant selon l'une quelconque des revendications 1 à 9,
**caractérisé en ce que**
le couvercle (4) présente une rainure (12), dans laquelle est placé un joint d'étanchéité (8) qui dépasse du côté extérieur (21) du couvercle (4).

11. Filtre à carburant selon l'une quelconque des revendications 9 à 10,
**caractérisé en ce que**
le boîtier (2) est en matière plastique.

12. Filtre à carburant selon l'une quelconque des revendications 1 à 11,
**caractérisé en ce que**
le boîtier (2) est en PA ou en POM.
